# EUROPEAN PATENT SPECIFICATION

(11) **EP 2 075 890 B1**
(45) Date of publication and mention of the grant of the patent: **03.07.2019**
(21) Application number: 07150456.7
(22) Date of filing: 28.12.2007
(51) Int. Cl.: H02J 3/38, F03D 9/00, F03D 7/02

(54) **Method for fast frequency regulation using a power reservoir**
Verfahren zur schnellen Frequenzregelung unter Verwendung eines Energiespeichers
Procédé de régulation de fréquence rapide utilisant un réservoir électrique

(43) Date of publication of application: 01.07.2009
(73) Proprietor: Vestas Wind Systems A/S, 8200 Aarhus N (DK)
(72) Inventor: Garcia, Jorge Martinez, 50009, Zaragoza (ES)
(74) Representative: Vestas Patents Department

(56) References cited:
- WO-A-99/50945
- WO-A-02/086314
- WO-A1-2004/027959
- GB-A- 648 363
- US-A- 4 511 807
- US-A1- 2004 051 387

## Description

### FIELD OF THE INVENTION

The present invention relates to a method for fast regulation of the fundamental frequency of electrical power distributed on a power supply grid operationally connected to a wind turbine optionally forming part of a wind farm.

### BACKGROUND OF THE INVENTION

Various arrangements for absorbing or dissipating electrical power exceeding a nominal power level have been suggested in connection with wind turbines feeding electrical power to an associated power supply grid.

The amount of electrical power fed into a power supply grid from a wind turbine is typically varied by pitching the rotor blades so that nominal power is generated at a given wind speed. However, pitching of rotor blades is a rather slow regulation mechanism. Thus, pitching of rotor blades will not be capable of compensating for sudden and strong gusts of wind.

Fast regulation mechanisms, such as electrically based arrangements, have been suggested in the patent literature.

For example, WO 99/50945 discloses an arrangement for dissipating electrical power from a wind turbine generator in case the amount of generated power exceeds the nominal production of the wind turbine generator. Thus, in case of flicker, i.e. a short-time overproduction due to strong gusts, or in case of overproduction caused by wind speeds being generally higher than nominal working conditions, electrical power may be dissipated in a dump load, said dump load comprising resistors, capacitors, inductors or a combination thereof.

Hence, WO 99/50945 is concerned with using a dump load to "burn-off" output spikes caused by strong gusts in order to increase quality of the delivered power. In addition, WO 99/50945 addresses "burn-off" of electrical power exceeding, over a longer period of time, at nominal power level. If the amount of electrical power provided from a dominant wind turbine to a power supply grid exceeds a nominal power level over a long period of time the grid frequency of the electrical power distributed via the supply may unintentionally increase to a level significantly higher than the nominal grid frequency of the power supply grid in question. The nominal grid frequency may be for example 50 Hz or 60 Hz.

WO2004/027959 A1 discloses a wind park with a power system stabilizer comprising a dump load for damping frequency deviations.

An unintentional increase of the grid frequency should be avoided due to the risk of damage to consumer electronics.

It may be seen as an object of the present invention to provide a simple and fast method for frequency regulation of electrical power distributed on a power supply grid operationally connected to one or more wind turbines.

It may be seen as a further object of the present invention to provide a method and an arrangement for frequency regulation of existing wind turbines operationally connected to the power supply grid.

### SUMMARY OF THE INVENTION

The above-mentioned objects are complied with by providing, in a first aspect a method for regulating a grid frequency of electrical power of a power supply grid operationally connected to a stall or pitch regulated wind turbine while said stall or pitch regulated wind turbine remains connected to the power supply grid, the stall or pitch regulated wind turbine comprising a wind turbine generator adapted to convert wind energy to electrical energy, the method comprising the steps of
- providing power absorption means adapted to absorb electrical power provided by the wind turbine generator or provided from the power supply grid,
- providing power regulation means adapted to regulate an amount of power to be absorbed in the power absorption means, and
- activating the power regulation means in order to absorb a predetermined amount of power in the power absorption means and thereby regulating the grid frequency of the electrical power of the power supply grid operationally connected to the wind turbine wherein the power absorption means and the power regulation means form part of the stall or pitch regulated wind turbine.

By regulation of a grid frequency is meant that if a measured grid frequency differs from a nominal grid frequency with more than a predetermined value regulation of the grid frequency is initiated by changing the amount of electrical power fed into the power supply grid from a wind turbine. In case a measured grid frequency is higher than the nominal grid frequency the amount of electrical power fed into the power supply grid is reduced, whereas in case a measured grid frequency is lower than the nominal grid frequency the amount of electrical power fed into the power supply grid is increased.

Depending on the grid code of the power supply grid, the measured frequency is typically allowed to differ up to 0.4% from the nominal frequency before regulation thereof is initiated. The range within which the grid frequency is allowed to vary is normally denoted a dead band. Thus, a nominal grid frequency of 50 Hz is allowed to vary from 49.8 Hz to 50.2 Hz before regulation is initiated. Similarly, a nominal grid frequency of 60 Hz is allowed to vary from 58.76 Hz to 60.24 Hz before regulation is initiated. It should be noted that the before-mentioned dead band of +/- 0.4% is just an example. Both a narrower and a wider dead band may also be applicable.

The present invention is of particular relevance for stall or pitch regulated wind turbines. A stall regulated wind turbine should be understood as a wind turbine where the rotor blades are mounted with a fixed angle to the rotor hub. At wind speeds below a value, *v*_{*P* max}, corresponding to maximum power generation a laminar flow is obtained around the rotor blades. When wind speeds exceed *v*_{*P* max} the flow around the rotor blades starts to detach from the blade and turbulence occur behind the rotor blade. A pitch regulated wind turbine should be understood as a wind turbine where the rotor blades, or parts thereof, may be pitched in or out of the wind in order to vary the wind power on the drive train of the wind turbine. However, due to the heavy masses involved, the time constants involved in pitching the rotor blades is too long in order to compensate for sudden gusts of wind.

The electrical power produced by the stall regulated wind turbine remains unchanged. However, the electrical power launched into the power supply grid is reduced by the amount of power absorbed in the power absorption means. In case of a pitch regulated wind turbine the wind power may be adjusted by pitching the rotor blades, or parts thereof, in and out of the wind. Hence, the amount of power absorbed depends on the speed of the blade pitching.

The term power absorption means should be interpreted broadly. Thus, the power absorption means may involve a device for dissipation/burning off of electrical power only. Alternatively, the power absorption means may involve a device capable of storing electrical energy for later use. Such later use may involve heating of for example water or it may involve grid frequency regulation in case the wind turbine is unable to generate sufficient power to increase the grid frequency. A strategy involving pitching of rotor blades in combination with an absorption of power in the power absorption means may also be followed. The size of the wind turbine may vary from some hundreds of kW to several MW, and the wind turbine may be positioned on land or at sea as an off-shore wind turbine.

The power absorption means and the power regulation means form part of the stall or pitch regulated wind turbine. In particular, the power absorption means and the power regulation means may be installed in the nacelle of the wind turbine, or they may be positioned on or near the foundation of the wind turbine.

The power absorption means may comprise one or more power resistors, said one or more power resistors being individually electrically accessible, or accessible in groups comprising a plurality of power resistors. In case the power absorption means comprises a plurality of power resistors, said power resistors may be coupled in series or in parallel.

Alternatively or in addition the power absorption means may comprise one or more capacitors, said one or more capacitors being individually electrically accessible, or accessible in groups comprising a plurality of capacitors. In case the power absorption means comprises a plurality of capacitors, said capacitors may be coupled in series or in parallel. The one or more capacitors may be used for storage purposes. In order to accumulate electrical energy in the one or more capacitors appropriate rectifier means, such as a inverter with active switches, such as IGBT's, MOSFET or thyristors or a passive rectifier bridge, is required in order to rectify the generated AC power.

The resistance and/or capacitance of the power absorption means may be variable so that the power absorption means may constitute a variable load. The size of the power absorption means may be within the range 5-50% of the rated capacity of the wind turbine. Preferably, the size may be within the range 10-30% of the rated capacity of the wind turbine.

The power regulation means may comprise first and second controllable switching elements, said first and second controllable switching elements being activeable in order to absorb the predetermined amount of power in the power absorption means. Suitable control means adapted to control the first and second controllable switching elements may be provided as well.

The first and second controllable switching elements may be arranged in an anti/parallel arrangement. In addition, the first and second controllable switching elements may comprise a first and a second thyristor, respectively, or a first and a second IGBT, respectively. However, other types of controllable silicon-based switching devices are also applicable.

The method according to the first aspect of the present invention may further comprise the step of applying electrical power absorbed in the power absorption means for heating purposes, such as for heating water. Such heated water may be provided consumers connected to the power supply grid.

Thus, according the first aspect of the present invention a method is provided for regulating a grid frequency of a power supply grid by varying the amount of electrical power fed into the supply grid from a wind turbine while still keeping said wind turbine running at optimal working conditions. The wind turbine generated electrical power exceeding the amount of electrical power to be launched into the supply grid is absorbed in appropriate absorption means, optionally for later use. In case the electrical power exceeding the amount to be launched into the supply grid is stored for later use, such later use may involve grid frequency regulation in situations where the wind turbine is unable to generate sufficient power.

In a second aspect, the present invention relates to a method for regulating a grid frequency of electrical power of a power supply grid operationally connected to a stall or pitch regulated wind turbine while said stall or pitch regulated wind turbine remains connected to the power supply grid, the stall or pitch regulated wind turbine comprising a wind turbine generator, the method comprising the step of varying an amount of electrical power absorbed in a wind turbine dump load thereby regulating the grid frequency of the electrical power of the power supply grid, wherein the wind turbine dump load and the power regulation means form part of the stall or pitch regulated wind turbine.

Stall or pitch regulated wind turbines as defined previously also apply in the second aspect of the present invention. Similarly, the size of the wind turbine may vary from some hundreds of kW to several MW.

Again, by regulation of a grid frequency is meant that if a measured grid frequency differs from a nominal grid frequency with more than a predetermined value regulation of the grid frequency is initiated by changing the amount of electrical power fed into the power supply grid from a wind turbine. Power exceeding the amount to be launched into the supply grid is absorbed in the wind turbine dump load. The absorbed electrical power may optionally be saved for later use. Such later use may involve heating of water or grid frequency regulation.

Similar to the first aspect of the present invention the measured frequency is allowed to differ up to 0.4% from the nominal frequency before regulation thereof is initiated. Thus, a nominal grid frequency of 50 Hz is allowed to vary from 49.8 Hz to 50.2 Hz before regulation is initiated. Similarly, a nominal grid frequency of 60 Hz is allowed to vary from 58.76 Hz to 60.24 Hz before regulation is initiated.

The wind turbine dump load may comprise one or more power resistors, said one or more power resistors being individually electrically accessible, or accessible in groups comprising a plurality of power resistors. Alternatively or in addition, the wind turbine dump load may comprise one or more capacitors, said one or more capacitors being individually electrically accessible, or accessible in groups comprising a plurality of capacitors.

The method according to the second aspect of the present invention may further comprise the steps of providing power regulation means adapted to regulate the amount of power being absorbed in the wind turbine dump load, and activating said power regulation means in order to absorb a predetermined amount of power in the wind turbine dump load so as to regulate the grid frequency of the electrical power of the power supply grid operationally connected to the wind turbine. The wind turbine dump load and the power regulation means form part of the stall or pitch regulated wind turbine.

The power regulation means may be implemented following the design route discussed in connection with the first aspect of the present invention.

In terms of implementation the power absorption means and the power regulation means may be implemented following the design route outlined in connection with the first aspect of the present invention. Preferably, the power absorption means and the power regulation means may form part of a bus bar collector inserted between the wind turbine farm and the power supply grid.

### BRIEF DESCRIPTION OF THE INVENTION

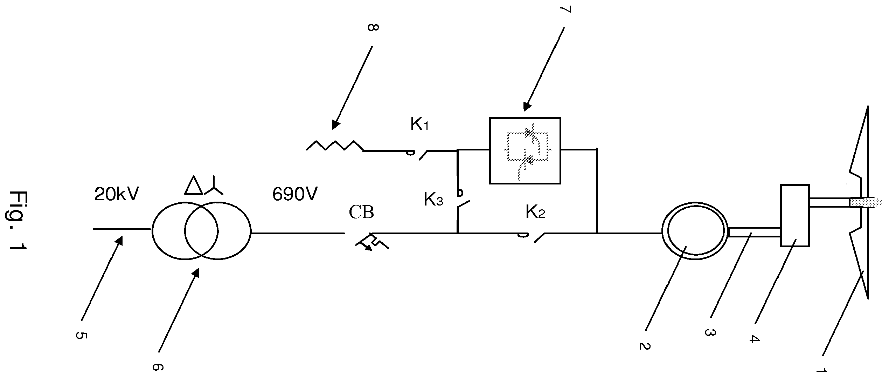

The present invention will now be disclosed in details with reference to Fig. 1 showing an embodiment of the present invention.

While the invention is susceptible to various modifications and alternative forms, a specific embodiment has been shown by way of example in Fig. 1 and will be described in details herein. It should be understood, however, that the invention is not intended to be limited to the particular form disclosed.

### DETAILED DESCRIPTION OF THE INVENTION

In its broadest aspect the present invention relates to an on-the-fly method for regulating a grid frequency of a power supply grid, and, at the same time, maintaining optimal working conditions of a stall or pitch regulated wind turbine operationally connected to the power supply grid. In case the grid frequency accidentally increases to an unacceptable level correction measures should be initiated in order to protect consumer electronics connected to the power supply grid.

According to the present invention the grid frequency of the power supply grid can be lowered by lowering the amount of electrical power provided to the power supply grid. To maintain a stall or pitch regulated wind turbine at optimal working conditions electrical power exceeding the amount to be delivered to the power supply grid is absorbed in some sort of electrical power reservoir, optionally for later use. The method according to the present invention is performed while keeping the stall or pitch regulated wind turbine connected to the power supply grid. Thus, the electrical power produced by the stall regulated wind turbine remains unchanged, but the electrical power launched into the power supply grid is reduced by the amount of power absorbed in the power reservoir, whereas the pitch regulated wind turbine can adjust the wind power by pitching the rotor blades, or parts thereof, in and out of the wind. Hence, the amount of power absorbed depends on the speed of the blade pitching. Alternatively, the pitch regulated wind turbine may be kept at maximal power production, i.e. not pitching the rotor blades for adjusting the wind power. In this approach the electrical power not launched into the power supply grid may be stored or dissipated in the power reservoir. Finally, a strategy involving pitching of rotor blades in combination with an absorption of power in the power reservoir may also be followed.

In the following, the present invention will be described with reference to a single wind turbine being used for regulating a grid frequency. It should be noted, however, that the present invention can be implemented on a wind turbine farm level as well. In case the present invention is implemented on a wind turbine farm level the power reservoir and an appropriate power regulation device for controlling the power flow to the power reservoir can form part of a bus bar collector inserted between the wind turbine farm and the power supply grid.

Referring now to Fig. 1 an arrangement for carrying out the method according to the present invention is depicted. The arrangement involves a wind turbine which as a minimum comprises a set of rotatably arranged rotor blades 1 operatively coupled to a wind turbine generator 2 through a drive train 3. The drive train 4 optionally involves a gear box 4. The arrangement further comprises a resistive or a capacitive power reservoir 8 for absorbing electrical power exceeding the amount of power to be delivered to the power supply grid 5, optionally through a three phase grid transformer 6. The grid transformer 6 transforms the wind turbine generator voltage, typically 690 V, to an appropriate grid voltage level, such as for example 20 kV. The windings of the grid transformer depicted in Fig. 1 are implemented as a star/delta connection, but other types of connections are also applicable. A circuit breaker CB is provided for disconnecting the wind turbine from the power supply grid if demands so require.

The amount of electrical power to be absorbed in the power reservoir 8 is controlled by a number of controllable switching elements. The controllable switching elements, which are arranged in an anti/parallel arrangement, form part of a power regulation module 7.

The controllable switching elements typically involve a first and a second thyristor, or alternatively, a first and a second IGBT, respectively, or other types of silicon-based switching arrangements. Appropriate control means are provided for controlling the operation of the first and second controllable switching elements so that the wind turbine is maintained at optimal conditions even though only a portion of its generated electrical power is fed into the power supply grid.

A number of contactors, K₁, K₂ and K₃ are provided in order to couple the various elements of the arrangement in and/or out of operation.

The arrangement depicted in Fig. 1 is operated as follows in order to carry out the method according to the present invention.

During normal operation contactor K₁ and K₂ are both closed while contactor K₃ is open. Circuit breaker CB is closed as well. If the grid frequency increases to an undesired level contactor K₁ is closed and the controllable switching elements are activated in order to initiate absorption of electrical power in the power reservoir which, as previously mentioned, can be of resistive and/or capacitive nature. K₃ is used for during start-up of the wind turbine.

The grid frequency is measured by appropriate sensor means, and the measured grid frequency is used as an input signal to a control module which is capable of generating appropriate control signals to the first and second controllable switching elements.

Thus, according to the present invention the wind turbine generator can be operated at nominal working conditions even through only a portion of the generated electrical power can be fed into the power supply grid because the grid frequency needs to be lowered. The amount of electrical power exceeding the portion to the fed into the power supply grid is absorbed in a power reservoir, optionally for later use.

In its simplest form the power reservoir is used for dissipating power using one or more power resistors. In a more advanced form the power reservoir is used for storage purposes in that the power reservoir comprises a number of capacitors. In order to accumulate electrical energy in this number of capacitors appropriate rectifier means, such as a inverter with active switches, such as IGBT's, MOSFET or thyristors or a passive rectifier bridge, is required in order to rectify the generated AC power. As previously mentioned, the size of the power reservoir is preferably within the range of 10-30% of the rated capacity of the wind turbine or wind turbine farm.

Accumulated energy in the form of electrical power can for example be used for heating purposes, such as for heating water. Alternatively, accumulated electrical power can be used to increase the grid frequency in case the wind turbine or wind turbine farm is unable to generate sufficient power.

## Claims

1. A method for regulating a grid frequency of electrical power of a power supply grid having a grid code associated therewith, the power supply grid being operationally connected to a stall or pitch regulated wind turbine during said grid frequency regulation, the stall or pitch regulated wind turbine comprising a wind turbine generator adapted to convert wind energy to electrical energy, the method comprising the steps of
- providing power absorption means adapted to absorb electrical power provided by the wind turbine generator or provided from the power supply grid,
- providing power regulation means adapted to regulate an amount of power to be absorbed in the power absorption means, and
- activating the power regulation means in order to absorb a predetermined amount of power in the power absorption means and thereby regulating the grid frequency of the electrical power of the power supply grid operationally connected to the wind turbine
wherein the power absorption means and the power regulation means form part of the stall or pitch regulated wind turbine.

2. A method according to claim 1, wherein the power absorption means comprises one or more power resistors, said one or more power resistors being individually electrically accessible, or accessible in groups comprising a plurality of power resistors.

3. A method according to claim 1, wherein the power absorption means comprises one or more capacitors, said one or more capacitors being individually electrically accessible, or accessible in groups comprising a plurality of capacitors.

4. A method according to any of the preceding claims, wherein the power regulation means comprises first and second controllable switching elements, said first and second controllable switching elements being activeable in order to absorb the predetermined amount of power in the power absorption means.

5. A method according to claim 4, further comprising the step of providing control means adapted to control the first and second controllable switching elements.

6. A method according to claim 4 or 5, wherein the first and second controllable switching elements are arranged in an anti/parallel arrangement.

7. A method according to any of claims 4-6, wherein the first and second controllable switching elements comprise a first and a second thyristor, respectively, or wherein the first and second controllable switching elements comprise a first and a second IGBT, respectively.

8. A method according to any of the preceding claims, further comprising the step of applying electrical power absorbed in the power absorption means for heating purposes, such as for heating water.

9. A method for regulating a grid frequency of electrical power of a power supply grid having a grid code associated therewith, the power supply grid being operationally connected to a stall or pitch regulated wind turbine during said grid frequency regulation, the stall or pitch regulated wind turbine comprising a wind turbine generator, the method comprising the step of varying an amount of electrical power absorbed in a wind turbine dump load thereby regulating the grid frequency of the electrical power of the power supply grid, wherein the wind turbine dump load and the power regulation means form part of the stall or pitch regulated wind turbine.

10. A method according to claim 9, wherein the wind turbine dump load comprises one or more power resistors, said one or more power resistors being individually electrically accessible, or accessible in groups comprising a plurality of power resistors.

11. A method according to claim 9, wherein the wind turbine dump load comprises one or more capacitors, said one or more capacitors being individually electrically accessible, or accessible in groups comprising a plurality of capacitors.

12. A method according to any of claims 9-11, further comprising the steps of providing power regulation means adapted to regulate the amount of power being absorbed in the wind turbine dump load, and activating said power regulation means in order to absorb a predetermined amount of power in the wind turbine dump load so as to regulate the grid frequency of the electrical power of the power supply grid operationally connected to the wind turbine.

13. A method according to claim 12, wherein the power regulation means comprises first and second controllable switching elements, said first and second controllable switching elements being activeable in order to absorb the predetermined amount of power in the wind turbine dump load.

14. A method according to claim 13, further comprising the step of providing control means adapted to control the first and second controllable switching elements.

15. A method according to claim 13 or 14, wherein the first and second controllable switching elements are arranged in an anti/parallel arrangement.

16. A method according to any of claims 13-15, wherein the first and second controllable switching elements comprise a first and a second thyristor, respectively, or wherein the first and second controllable switching elements comprise a first and a second IGBT, respectively.

17. A method according to claims 9 - 16, further comprising the step of applying electrical power absorbed in the wind turbine dump load for heating purposes, such as for heating water.

## Patentansprüche

1. Verfahren zum Regulieren einer Netzfrequenz einer elektrischen Leistung eines Versorgungsnetzes mit mit diesem verbundenen Netzanschlussregeln, wobei das Versorgungsnetz während der Netzfrequenzregulierung operativ mit einer stall- oder blattwinkelverstellgeregelten Windkraftanlage verbunden ist, wobei die stall- oder blattwinkelverstellgeregelte Windkraftanlage einen Windkraftanlagengenerator umfasst, der dazu eingerichtet ist, Windenergie in elektrische Energie umzuwandeln, wobei das Verfahren die folgenden Schritte umfasst:
- Bereitstellen eines Leistungsabsorptionsmittels, das dazu eingerichtet ist, elektrische Leistung, die durch den Windkraftanlagengenerator bereitgestellt wird oder von dem Versorgungsnetz bereitgestellt wird, zu absorbieren,
- Bereitstellen eines Leistungsregulierungsmittels, das dazu eingerichtet ist, eine in dem Leistungsabsorptionsmittel zu absorbierende Leistungsmenge zu regulieren, und
- Aktivieren des Leistungsregulierungsmittels, um eine vorbestimmte Leistungsmenge in dem Leistungsabsorptionsmittel zu absorbieren, und dadurch Regulieren der Netzfrequenz der elektrischen Leistung des operativ mit der Windkraftanlage verbundenen Versorgungsnetzes,
- wobei das Leistungsabsorptionsmittel und das Leistungsregulierungsmittel einen Teil der stall- oder blattwinkelverstellgeregelten Windkraftanlage bilden.

2. Verfahren nach Anspruch 1, wobei das Leistungsabsorptionsmittel einen oder mehrere Leistungswiderstände umfasst, wobei der eine oder die mehreren Leistungswiderstände einzeln elektrisch zugänglich sind oder in Gruppen, die eine Mehrzahl von Leistungswiderständen umfassen, zugänglich sind.

3. Verfahren nach Anspruch 1, wobei das Leistungsabsorptionsmittel einen oder mehrere Kondensatoren umfasst, wobei der eine oder die mehreren Kondensatoren einzeln elektrisch zugänglich sind oder in Gruppen, die eine Mehrzahl von Kondensatoren umfassen, zugänglich sind.

4. Verfahren nach einem der vorstehenden Ansprüche, wobei das Leistungsregulierungsmittel erste und zweite steuerbare Schaltelemente umfasst, wobei die ersten und zweiten steuerbaren Schaltelemente aktivierbar sind, um die vorbestimmte Leistungsmenge in dem Leistungsabsorptionsmittel zu absorbieren.

5. Verfahren nach Anspruch 4, das weiter den Schritt eines Bereitstellens eines Steuermittels, das dazu eingerichtet ist, die ersten und zweiten steuerbaren Schaltelemente zu steuern, umfasst.

6. Verfahren nach Anspruch 4 oder 5, wobei die ersten und zweiten steuerbaren Schaltelemente in einer Antiparallelanordnung angeordnet sind.

7. Verfahren nach einem der Ansprüche 4 bis 6, wobei die ersten und zweiten steuerbaren Schaltelemente einen ersten bzw. einen zweiten Thyristor umfassen oder wobei die ersten und zweiten steuerbaren Schaltelemente einen ersten bzw. einen zweiten IGBT umfassen.

8. Verfahren nach einem der vorstehenden Ansprüche, das weiter den Schritt eines Anlegens einer in dem Leistungsabsorptionsmittel absorbierten elektrischen Leistung zu Heizzwecken wie beispielsweise zum Erhitzen von Wasser umfasst.

9. Verfahren zum Regulieren einer Netzfrequenz einer elektrischen Leistung eines Versorgungsnetzes mit mit diesem verbundenen Netzanschlussregeln, wobei das Versorgungsnetz während der Netzfrequenzregulierung operativ mit einer stall- oder blattwinkelverstellgeregelten Windkraftanlage verbunden ist, wobei die stall- oder blattwinkelverstellgeregelte Windkraftanlage einen Windkraftanlagengenerator umfasst, wobei das Verfahren den Schritt eines Variierens einer Menge einer in einer Windkraftanlagenabwurflast absorbierten elektrischen Leistung und dadurch Regulierens der Netzfrequenz der elektrischen Leistung des Versorgungsnetzes umfasst, wobei die Windkraftanlagenabwurflast und das Leistungsregulierungsmittel einen Teil der stall- oder blattwinkelverstellgeregelten Windkraftanlage bilden.

10. Verfahren nach Anspruch 9, wobei die Windkraftanlagenabwurflast einen oder mehrere Leistungswiderstände umfasst, wobei der eine oder die mehreren Leistungswiderstände einzelnen elektrisch zugänglich sind oder in Gruppen, die eine Mehrzahl von Leistungswiderständen umfassen, zugänglich sind.

11. Verfahren nach Anspruch 9, wobei die Windkraftanlagenabwurflast einen oder mehrere Kondensatoren umfasst, wobei der eine oder die mehreren Kondensatoren einzelnen elektrisch zugänglich sind oder in Gruppen, die eine Mehrzahl von Kondensatoren umfassen, zugänglich sind.

12. Verfahren nach einem der Ansprüche 9 bis 11, das weiter die Schritte eines Bereitstellens eines Leistungsregulierungsmittels, das dazu eingerichtet ist, die Leistungsmenge, die in der Windkraftanlagenabwurflast absorbiert wird, zu regulieren, und eines Aktivierens des Leistungsregulierungsmittels, um eine vorbestimmte Leistungsmenge in der Windkraftanlagenabwurflast zu absorbieren, um die Netzfrequenz der elektrischen Leistung des operativ mit der Windkraftanlage verbundenen Versorgungsnetzes zu regulieren, umfasst.

13. Verfahren nach Anspruch 12, wobei das Leistungsregulierungsmittel erste und zweite steuerbare Schaltelemente umfasst, wobei die ersten und zweiten steuerbaren Schaltelemente aktivierbar sind, um die vorbestimmte Leistungsmenge in der Windkraftanlagenabwurflast zu absorbieren.

14. Verfahren nach Anspruch 13, das weiter den Schritt eines Bereitstellens eines Steuermittels, das dazu eingerichtet ist, die ersten und zweiten steuerbaren Schaltelemente zu steuern, umfasst.

15. Verfahren nach Anspruch 13 oder 14, wobei die ersten und zweiten steuerbaren Schaltelemente in einer Antiparallelanordnung angeordnet sind.

16. Verfahren nach einem der Ansprüche 13 bis 15, wobei die ersten und zweiten steuerbaren Schaltelemente einen ersten bzw. einen zweiten Thyristor umfassen oder wobei die ersten und zweiten steuerbaren Schaltelemente einen ersten bzw. einen zweiten IGBT umfassen.

17. Verfahren nach den Ansprüchen 9 bis 16, das weiter den Schritt eines Anlegens einer in der Windkraftanlagenabwurflast absorbierten elektrischen Leistung zu Heizzwecken wie beispielsweise zum Erhitzen von Wasser umfasst.

## Revendications

1. Procédé pour réguler une fréquence de réseau d'une puissance électrique d'un réseau d'alimentation électrique ayant un convention de raccordement associé à celui-ci, le réseau d'alimentation électrique étant relié fonctionnellement à une éolienne à pas fixe ou à pas variable pendant ladite régulation de fréquence de réseau, l'éolienne à pas fixe ou à pas variable comprenant un aérogénérateur adapté pour transformer de l'énergie éolienne en énergie électrique, le procédé comprenant les étapes de
- fourniture d'un moyen d'absorption de puissance adapté pour absorber la puissance électrique fournie par l'aérogénérateur ou fournie depuis le réseau d'alimentation électrique,
- fourniture d'un moyen de régulation de puissance adapté pour réguler une quantité de puissance devant être absorbée dans le moyen d'absorption de puissance, et
- activation du moyen de régulation de puissance afin d'absorber une quantité de puissance prédéterminée dans le moyen d'absorption de puissance et réguler ainsi la fréquence de réseau de la puissance électrique du réseau d'alimentation électrique relié fonctionnellement à l'éolienne
dans lequel le moyen d'absorption de puissance et le moyen de régulation de puissance font partie de l'éolienne à pas fixe ou à pas variable.

2. Procédé selon la revendication 1, dans lequel le moyen d'absorption de puissance comprend une ou plusieurs résistances de puissance, lesdites une ou plusieurs résistances de puissance étant individuellement accessibles électriquement, ou accessibles en groupes comprenant une pluralité de résistances de puissance.

3. Procédé selon la revendication 1, dans lequel le moyen d'absorption de puissance comprend un ou plusieurs condensateurs, lesdits un ou plusieurs condensateurs étant individuellement accessibles électriquement, ou accessibles en groupes comprenant une pluralité de condensateurs.

4. Procédé selon l'une quelconque des revendications précédentes, dans lequel le moyen de régulation de puissance comprend des premier et second éléments de commutation commandés, lesdits premier et second éléments de commutation commandés pouvant être activés afin d'absorber la quantité de puissance prédéterminée dans le moyen d'absorption de puissance.

5. Procédé selon la revendication 4, comprenant en outre l'étape de fourniture d'un moyen de commande adapté pour commander les premier et second éléments de commutation commandés.

6. Procédé selon les revendications 4 ou 5, dans lequel les premier et second éléments de commutation commandés sont agencés selon un agencement antiparallèle.

7. Procédé selon l'une quelconque des revendications 4-6, dans lequel les premier et second éléments de commutation commandés comprennent un premier et un second thyristor, respectivement, ou dans lequel les premier et second éléments de commutation commandés comprennent un premier et un second IGBT, respectivement.

8. Procédé selon l'une quelconque des revendications précédentes, comprenant en outre l'étape d'application de la puissance électrique absorbée dans le moyen d'absorption de puissance à des fins de chauffage, par exemple pour chauffer de l'eau.

9. Procédé pour réguler une fréquence de réseau d'une puissance électrique d'un réseau d'alimentation électrique ayant un convention de raccordement associé à celui-ci, le réseau d'alimentation électrique étant relié fonctionnellement à une éolienne à pas fixe ou à pas variable pendant ladite régulation de fréquence de réseau, l'éolienne à pas fixe ou à pas variable comprenant un aérogénérateur, le procédé comprenant l'étape de variation d'une quantité de puissance électrique absorbée dans une charge de lissage d'éolienne régulant ainsi la fréquence de réseau de la puissance électrique du réseau d'alimentation électrique, dans lequel la charge de lissage de l'éolienne et le moyen de régulation de puissance font partie de l'éolienne à pas fixe ou à pas variable.

10. Procédé selon la revendication 9, dans lequel la charge de lissage de l'éolienne comprend une ou plusieurs résistances de puissance, lesdites une ou plusieurs résistances de puissance étant individuellement accessibles électriquement, ou accessibles en groupes comprenant une pluralité de résistances de puissance.

11. Procédé selon la revendication 9, dans lequel la charge de lissage de l'éolienne comprend un ou plusieurs condensateurs, lesdits un ou plusieurs condensateurs étant individuellement accessibles électriquement, ou accessibles en groupes comprenant une pluralité de condensateurs.

12. Procédé selon l'une quelconque des revendications 9-11, comprenant en outre les étapes de fourniture d'un moyen de régulation de puissance adapté pour réguler la quantité de puissance qui est absorbée dans la charge de lissage de l'éolienne, et d'activation dudit moyen de régulation de puissance afin d'absorber une quantité de puissance prédéterminée dans la charge de lissage de l'éolienne de manière à réguler la fréquence de réseau de la puissance électrique du réseau d'alimentation électrique relié fonctionnellement à l'éolienne.

13. Procédé selon la revendication 12, dans lequel le moyen de régulation de puissance comprend des premier et second éléments de commutation commandés, lesdits premier et second éléments de commutation commandés pouvant être activés afin d'absorber la quantité de puissance prédéterminée dans la charge de lissage de l'éolienne.

14. Procédé selon la revendication 13, comprenant en outre l'étape de fourniture d'un moyen de commande adapté pour commander les premier et second éléments de commutation commandés.

15. Procédé selon les revendications 13 ou 14, dans lequel les premier et second éléments de commutation commandés sont agencés selon un agencement antiparallèle.

16. Procédé selon l'une quelconque des revendications 13-15, dans lequel les premier et second éléments de commutation commandés comprennent un premier et un second thyristor, respectivement, ou dans lequel les premier et second éléments de commutation commandés comprennent un premier et un second IGBT, respectivement.

17. Procédé selon les revendications 9-16, comprenant en outre l'étape d'application de la puissance électrique absorbée dans la charge de lissage de l'éolienne à des fins de chauffage, par exemple pour chauffer de l'eau.
